# FASCICULE DE BREVET EUROPEEN

(11) **EP 3 484 750 B1**
(45) Date de publication et mention de la délivrance du brevet: **11.05.2022**
(21) Numéro de dépôt: 17745393.3
(22) Date de dépôt: 23.06.2017
(51) Int. Cl.: B60R 3/02, B60Q 3/00

(54) **RÉTRO-ÉCLAIRAGE DE PIÈCE D'HABILLAGE AUTOMOBILE SOUS PEAU MOUSSÉE D'ASPECT MODULAIRE**
HINTERGRUNDBELEUCHTUNG FÜR EINE FAHRZEUGVERKLEIDUNGL UNTER EINER SCHAUMSTOFFHAUT MIT MODULAREM ERSCHEINUNGSBILD
BACKLIGHTING FOR AN AUTOMOBILE TRIM UNDER A FOAM SKIN OF MODULAR APPEARANCE

(30) Priorité: 12.07.2016 FR 1656651
(43) Date de publication de la demande: 22.05.2019
(73) Titulaire: Renault s.a.s, 92100 Boulogne Billancourt (FR)
(72) Inventeur: LE MAUX, Caroline, 92340 Bourg-la-Reine (FR); GIRAUD, Damien, 78960 Voisns le Bretonneux (FR)
(74) Mandataire: Renault Group
(86) Numéro de dépôt international: PCT/FR2017/051685
(87) Numéro de publication internationale: WO 2018/011484

(56) Documents cités:
- DE-A1-102005 025 555
- FR-A1- 2 911 555
- FR-A1- 2 912 095
- FR-A1- 2 936 588
- FR-A1- 2 937 928
- US-A1- 2014 211 498

## Description

L'invention a pour objet les pièces d'habillage automobile.

De plus en plus fréquemment, les différents éléments de l'intérieur de l'habitacle sont appelés à assurer des fonctions interactives, et notamment à créer un environnement et/ou à afficher des messages en fonction du contexte et de l'historique des habitants du véhicule. On peut ainsi souhaiter modifier l'aspect global de surface d'une pièce d'habillage, par exemple pour rendre mieux visibles certaines zones fonctionnelles, telles que les poignées ou des contours de vide-poche. On peut également souhaiter afficher des informations circonstanciées, par exemple un message d'alerte si une ceinture de sécurité est mal attachée.

Pour des raisons de confort, une partie au moins des pièces d'habillage comporte une épaisseur, variable selon les endroits, de mousse compressible, afin à la fois d'assurer un toucher confortable et de respecter les formes fonctionnelles de la pièce.

On peut souhaiter ajouter une fonction de rétroéclairage à ces pièces, pour modifier leur aspect et/ou pour afficher des informations à l'attention des usagers du véhicule. On connait des couches laissant transparaitre la lumière, et incorporant une couche opaque, recouvrant sélectivement des portions de la couche laissant passer de lumière, de manière à pouvoir créer un rétro éclairage.

De tels revêtements ne sont cependant pas adaptés à la réalisation des pièces moussées. Le document FR 2 912 095 montre une pièce d'habillage selon le préambule de la revendication 1.

L'invention a pour but de proposer un procédé de fabrication selon la revendication 9 ou selon la revendication 10 qui permet d'intégrer un motif de rétroéclairage spécifique dans une pièce à épaisseur de mousse multiforme. Par épaisseur de mousse multiforme, on entend ici que la mousse -qui est en outre compressible avec retour élastique ou visco-élastique après déformation- présente une épaisseur variable d'un endroit à l'autre de la pièce. Les valeurs d'épaisseur de mousse d'une telle pièce peuvent par exemple varier du simple au double voire du simple au quintuple de l'épaisseur la plus faible de mousse sur la pièce (épaisseur la plus faible mesurée par exemple mousse non comprimée, hors zone se trouvant dans le dernier centimètre bordant la pièce).

A cette fin, il est proposé une pièce d'habillage pour véhicule automobile, selon la revendication 1, comprenant:
- une armature,
- une peau de surface souple recouvrant tout ou partie de l'armature,
- une couche de mousse compressible reliant la peau et l'armature, remplissant une épaisseur variable séparant la peau de l'armature.

La pièce d'habillage comprend au moins un guide de lumière, le guide de lumière formant sous la mousse ou dans la mousse, au moins une zone longiligne ou surfacique de diffusion, configurée pour diffuser de la lumière en direction d'une ou plusieurs portion de la peau. Le guide de lumière est de préférence placé pour qu'au moins une zone de diffusion du guide de lumière puisse diffuser de la lumière en direction d'une région de peau parmi les plus proches localement de la zone de diffusion.

La peau comprend au moins une couche opaque à la lumière émanant du guide de lumière. La couche opaque présente, en regard d'au moins une zone de diffusion du guide de lumière, des portions formant motif d'affichage au niveau de réduction locales d'épaisseur et/ou des découpes locales de la couche opaque, ménagées pour laisser passer localement de la lumière émise par le guide de lumière, la mousse étant entaillée d'au moins une ligne de découpe traversant la mousse entre le guide de lumière et la peau, la même ligne traversant au moins une partie de l'épaisseur de la couche opaque.

Le guide de lumière peut être en contact avec les zones formant motif de la peau. Le guide de lumière peut être séparé des zones formant motif de la peau par des chemins conducteur de lumière tels que des entailles ouvertes ou des interstices ouverts, ou par une ou des portions de mousse translucide.

L'épaisseur moyenne de mousse est typiquement plus élevée que l'épaisseur de la peau elle-même. On considère que la peau présente une structure plus compacte que la mousse. La peau, contrairement à la mousse, ne comporte pas de structure alvéolaire ou, si elle présente une structure alvéolaire, celle-ci est à faible proportion de volumes vides ou remplis de gaz, par exemple une proportion inférieure ou égale à 10% en volume. L'épaisseur moyenne de la mousse peut être typiquement comprise entre 5 et 12mm.L'épaisseur de la peau peut être par exemple de 0,5 à 3mm, avantageusement comprise entre 0,7 et 2mm. La mousse peut être par exemple une mousse de polyuréthane formée "in situ" au contact de la peau et de l'armature et/ou du guide de lumière, à l'intérieur d'un moule spécifique permettant de maintenir la peau en appui sur un contour adéquat de l'armature, dans sa position finale idoine par rapport à la peau. De telles méthodes de fabrication de pièces moussées sont largement connues et ne sont par conséquent pas décrites ici. La peau peut typiquement comprendre au moins une couche en polychlorure de vinyle. Selon un autre mode de réalisation. La peau peut comprendre au moins une couche à base de polyuréthane, ce qui facilite l'adhésion de la peau avec la mousse. D'autres types de peaux peuvent aussi être utilisées comme du TPO (thermoplastique à base oléfinique) ou d'autres matières.

La mousse est réversiblement compressible, configurée pour revenir à une épaisseur de repos en absence de force de compression. On considère qu'une couche est opaque ou sensiblement opaque à l'éclairage du guide de lumière, si elle absorbe au moins 80% de l'intensité lumineuse émanent du guide de lumière. L'absorption est mesurée dans les zones non entaillées de la peau.

L'armature est considérée comme rigide,_car elle présente une déflection sous charge sensiblement moins élevée que la peau seule, pour une même surface ou une même longueur de peau ou d'armature sollicitée.

L'armature peut être réalisée par exemple en polypropylène. Le guide de lumière peut être réalisé par exemple en polycarbonate transparent ou en polyméthacrylate de méthyle.

Le guide de lumière peut être la même pièce que l'armature, réalisée dans un matériau conducteur de lumière, plus rigide que la peau. Selon un autre mode de réalisation, l'armature peut comprendre une pièce opaque distincte du guide de lumière. La matière du guide de lumière peut être plus rigide que la peau. On peut envisager des variantes de réalisation dans lesquelles le guide de lumière est plus souple que l'armature. On peut envisager des variantes de réalisations dans lesquelles le guide de lumière et l'armature sont une seule pièce bimatière réalisée par surmoulage ou par co-injection par exemple.

Le guide de lumière peut être une portion de matière transparente assemblée ou surmoulée sur une pièce d'armature opaque.

La peau est de préférence grainée, de manière à limiter la visibilité des découpes ou des zones d'épaisseur réduite quand le guide de lumière ne transmet pas de lumière. La largeur d'un motif de grain est choisie avantageusement du même ordre de grandeur que la largeur de la / des découpes ou des restrictions d'épaisseur, par exemple comprise entre une fois et dix fois la largeur du motif formé par les découpes/les restrictions d'épaisseurs.

De manière avantageuse, la peau comprend au moins une couche de matière translucide et/ou transparente à l'éclairage émanant du guide de lumière, recouvrant une couche de matière opaque de la peau. Les deux couches sont de préférences adhérentes l'une à l'autre sur toute la surface supérieure de la couche opaque. La transition de propriétés optique peut être graduelle entre la couche sensiblement opaque et la ou les couches translucides et/ou transparentes. Selon un autre mode de réalisation, la transition de propriétés peut être franche, si par exemple la peau comprend deux couches de matériaux différents collées, par exemple laminées l'une sur l'autre. Un autre mode de cohésion entre couches peut être envisagé comme de la réalisation «in situ» avec des couches compatibles chimiquement.

Selon un mode de réalisation, un chemin lumineux rectiligne traverse la mousse entre le guide de lumière et la peau, et traverse au moins une partie de l'épaisseur de la couche sensiblement opaque. Le chemin lumineux peut être une ligne de découpe ouverte. La ligne découpe traverse alors au moins la mousse et la peau. Avantageusement, la ligne découpe traverse aussi le guide de lumière. On parle de ligne de découpe car la découpe traverse la mousse suivant une ligne ou suivant une surface réglée de génératrices par exemple perpendiculaires à la peau.

Un guide de lumière peut venir au contact de la peau au niveau d'au moins une partie des portions formant motif d'affichage. La mousse peut avoir été formée après avoir mis en appui le guide de lumière contre les zones formant motif de la peau. Le guide de lumière peut être en appui sur la totalité ou sur une partie des zones formant motif de la peau. Les zones formant motif de la peau peuvent par exemple avoir été découpées par exemple au laser, préalablement au moussage. Selon une variante de réalisation, le guide de lumière peut comporter des picots en relief ou des lignes en relief venant en appui sur la peau au niveau d'au moins un groupe de points du motif d'affichage. Le guide de lumière peut éclairer de manière plus distante d'autres points du motif à travers des découpes de la mousse. On peut alors obtenir un motif à plusieurs zones d'éclairages, en conservant la compressibilité de la pièce entre les zones d'appui du guide de lumière contre la peau.

La découpe peut être effectuée après l'opération de moussage, et un guide de lumière peut être mis en place après la découpe. Une zone d'appui du guide de lumière peut être superposée sur la pièce à plusieurs découpes ou plusieurs lignes d'amincissement de la peau.

La pièce peut comporter plusieurs guides de lumière. La pièce peut comporter des guides de lumière pouvant être alimentés en lumière indépendamment les uns des autres, de manière à pouvoir afficher plusieurs motifs lumineux distincts. La pièce peut comporter un guide de lumière principal et des guides de lumière secondaires alimentés en lumière à partir du guide de lumière principal, par exemple réalisés en matériau plus souple que le guide de lumière lumineux principal, pour conserver une souplesse globale en compression de la surface de la pièce.

Selon un mode de réalisation, au moins une portion d'un guide de lumière est séparés de la peau par une épaisseur de mousse, la mousse étant traversée par des entailles ouvertes entre le ou les guides de lumière et les zones formant motif de la peau. L'entaille peut traverser le guide de lumière. Un ou des guides de lumière secondaires peuvent être insérés dans des entailles ou des ajours du guide de lumière entaillé, ou dans des entailles ou des ajours de l'armature.

Un guide de lumière secondaire peut être par exemple mis en place après avoir formé une épaisseur variable de mousse entre la peau et une armature et/ou un premier guide de lumière, puis découpé la mousse conjointement avec la couche opaque de la peau et l'armature/le premier guide de lumière. Des zones ajourées peuvent être prévues dans l'armature pour laisser accessibles les zones à découper au travers le la mousse et de la peau, auquel cas il n'est pas nécessaire d'entailler l'armature.

La couche de matière translucide et/ou transparente peut présenter au niveau des zones formant motif, des restrictions d'épaisseurs ne traversant qu'une partie de ladite couche. Avantageusement, la couche transparente peut garder, même au droit des zones formant motif, une épaisseur résiduelle d'au moins 0,2 fois son épaisseur maximale. On obtient ainsi une peau apte à afficher un motif lumineux. La couche opaque peut être au moins par endroit entaillée de manière traversante pour mieux laisser passer la lumière.

Est également proposé un véhicule équipé d'une pièce d'habillage selon l'une quelconque des revendications précédentes, la pièce d'habillage étant disposée autour de, ou le long d'une ouverture permettant à accéder à un volume de rangement.

Dans un véhicule, une pièce d'habillage selon l'invention peut être disposée autour de, ou contre, une poignée ou un organe d'actionnement manuel. Il est ainsi possible de rendre visible la poignée ou l'organe d'actionnement quand l'habitacle est peu éclairé par ailleurs.

L'habitacle d'un véhicule peut comporter des zones interactives moussées, grâce à une pièce d'habillage telle que décrite précédemment, intégrant ou recouvrant une surface capacitive disposée sensiblement sous une zone formant motif, apte à détecter le contact d'une main sur la zone formant motif. La surface capacitive peut être par exemple disposée sous le guide de lumière, ou être noyée dans la mousse à proximité immédiate du guide de lumière.

Selon un mode de réalisation avantageux, le guide de lumière est alimenté par une source lumineuse commandée par une unité de commande électronique en fonction de paramètres de situation des passagers tels que l'état de verrouillage des portes du véhicule, l'état de verrouillage des ceintures de sécurité, ou l'activation de l'éclairage extérieur du véhicule.

Des informations et/ou des modes d'éclairage circonstanciés peuvent ainsi être fournis aux passagers en fonction du contexte de navigation ou de stationnement du véhicule.

Un procédé de fabrication d'une pièce rétroéclairée d'habillage de véhicule automobile, peut avantageusement comprendre les étapes suivantes :
- disposer une peau souple, recouverte ou non de mousse, dans un moule ou sur un cadre,
- placer dans un moule une armature rigide espacée de la peau,
- plaquer la peau contre l'armature si elle est déjà moussée, sinon former une couche de mousse entre la peau et l'armature, de manière à rendre la mousse adhérente à la peau et à l'armature,
- plaquer la peau sur une coquille grainée pour réaliser des motifs sur la peau,
- entailler sélectivement la couche opaque sur au moins une portion de son épaisseur pour permettre à un rétroéclairage de traverser un motif formé par les zones entaillées,
- placer un guide de lumière au droit des zones comportant le motif entaillé.

Selon un mode de réalisation de l'invention, le procédé comprend les étapes suivantes :
- placer dans un moule de moussage une peau souple comprenant au moins une couche opaque au rétroéclairage,
- placer dans le moule une armature rigide espacée de la peau,
- former une couche de mousse entre la peau et l'armature, adhérente à la peau et à l'armature,
- entailler sélectivement la couche opaque sur au moins une portion de son épaisseur pour permettre à un rétroéclairage de traverser un motif formé par les zones entaillées, en entaillant également la mousse par au moins une ligne de découpe traversant à la fois la mousse (2) et la couche opaque (7),
- placer un guide de lumière au droit des zones comportant le motif entaillé.

Selon un autre mode de réalisation de l'invention, le procédé comprend les étapes suivantes :
- placer dans un cadre une peau souple associée à une mousse comprenant au moins une couche opaque au rétroéclairage,
- placer dans une coquille une armature rigide espacée de la peau,
- chauffer la peau, la buller, et la plaquer contre l'armature. En complément un plaquage de la peau sur une coquille grainée peut être envisagé pour réaliser des motifs sur la peau,
- entailler sélectivement la couche opaque sur au moins une portion de son épaisseur, en entaillant également la mousse par au moins une ligne de découpe traversant à la fois la mousse et la couche opaque pour permettre à un rétroéclairage de traverser un motif formé par les zones entaillées,
- placer un guide de lumière au droit des zones comportant le motif entaillé.

L'entaille de la peau peut être effectuée avant le moussage, n'affectant alors que la peau. Le guide de lumière peut être alors placé avant le moussage. L'entaille de la peau peut être effectuée après la fabrication de la pièce, affectant alors au moins la peau et la mousse, et dans certains modes de réalisation, affectant aussi l'armature. Le guide de lumière peut être alors formé par l'armature entaillée, ou être mis en place après l'opération d'entaille, dans les entailles elles mêmes ou au travers d'ajours prévus dans l'armature.

Quelques buts, caractéristiques et avantages de l'invention apparaîtront à la lecture de la description suivante, donnée uniquement à titre d'exemple non limitatif, et faite en référence aux figures annexées, sur lesquelles :
Les figures 1a, 1b, 1c illustrent des pièces d'habillage automobile, respectivement selon l'art antérieur et selon deux variantes de réalisation de l'invention.
La figure 2a illustre une pièce dite "moussée" utilisée dans l'habillage de véhicules automobile.
La figure 2b illustre une pièce moussée dont le processus de fabrication peut être adapté selon l'invention pour obtenir une pièce rétroéclairée.
Les figures 3a, 3b, 3c, 3d illustrent des étapes de fabrication d'une pièce d'habillage selon un premier mode de réalisation de l'invention.
Les figures 4a et 4b illustrent des étapes de fabrication d'une pièce d'habillage selon un deuxième mode de réalisation de l'invention.

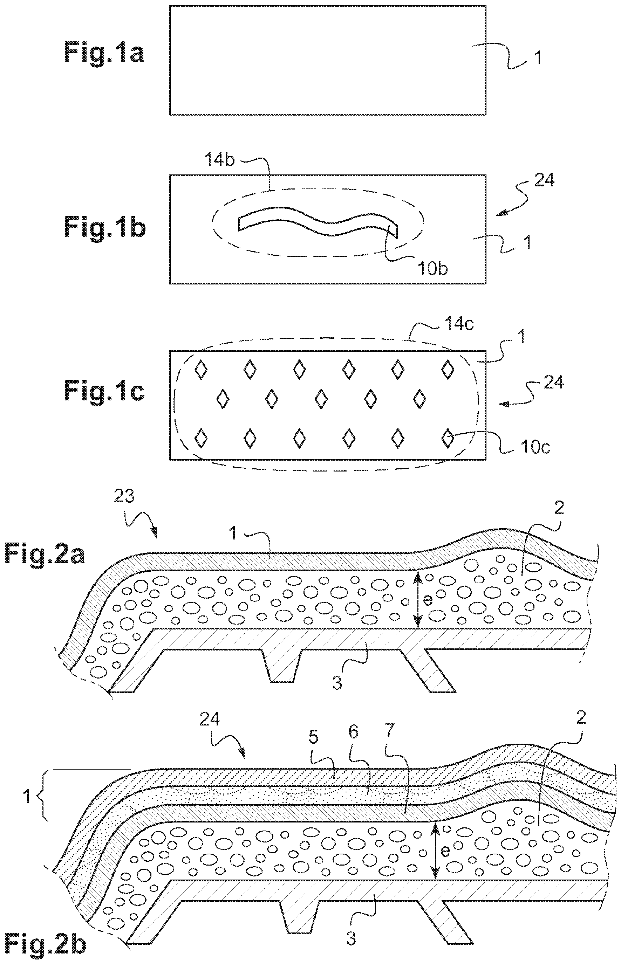

Les figures 1a, 1b, 1c illustrent trois aspects de pièces d'habillage (ou de différentes zones d'une même pièce d'habillage) vus de dessus.

La figure la représente l'aspect uniforme d'une pièce d'habillage selon l'invention comportant un dispositif de rétroéclairage, quand ce dispositif n'est pas activé. Cet aspect est sensiblement identique à celui d'une pièce de l'art antérieur non munie de rétroéclairage.

La figure 1b est un exemple de motif lumineux qui peut être affiché sur une pièce d'habillage moussée selon l'invention, équipée d'un dispositif de rétro éclairage, ce dernier étant actif. La pièce selon l'invention est recouverte d'une peau de surface d'aspect sensiblement uniforme, comportant une couche opaque à un éclairage arrivant de dessous la pièce. Par couche opaque, on entend ici une couche apte à absorber au moins 50% de l'intensité lumineuse du dispositif lumineux installé derrière cette couche dans le véhicule, pour former une source lumineuse en direction d'une des faces de la couche opaque.

Par "dessus de la pièce" ou par "face avant de la pièce", on entend ici et par la suite la face visible de la pièce d'habillage. Par "dessous de la pièce" ou par "face arrière de la pièce", on entend ici et par la suite la le côté ou le demi espace se trouvant du côté de la face masquée de la pièce d'habillage. On considère sur les figures 1a, 1b, 1c que l'observateur se trouve du côté visible de la pièce d'habillage moussée désignée également dans la description comme le côté supérieur de la pièce, et qu'un système de rétroéclairage se trouve séparé de l'observateur par la surface supérieure de la pièce. La mousse donnant sa souplesse à la pièce se trouve également séparée de l'observateur par la peau de surface de la pièce. On désigne la surface supérieure par "peau", car elle présente une souplesse permettant une indentation locale d'un doigt d'un occupant du véhicule au niveau des zones moussées. La peau peut par exemple comprendre des matériaux de type élastomères.

Dans l'exemple illustré en figure 1b, la couche opaque est localement entaillée ou amincie pour former un motif 10b qui apparaît ainsi comme un motif lumineux quand il est éclairé par le côté masqué de la pièce, par des moyens décrits plus loin. La présence spatiale d'un ou plusieurs motifs 10b permet de définir une ou plusieurs zones d'affichage 14b, dont l'aspect varie suivant que le rétroéclairage est activé ou non.

La figure 1c illustre un autre exemple d'une portion de pièce d'habillage moussée selon l'invention sur laquelle un motif lumineux 10c est activé dans une région d'affichage 14c.

La figure 2a illustre la structure générale d'une pièce 23 dite «moussée»" telle que l'on en utilise dans l'habillage de véhicule automobile. La tenue mécanique de la pièce est essentiellement assurée par une armature 3 assurant la tenue globale en flexion de la pièce. Le contour extérieur visible de la pièce est défini par une peau souple 1. Cette peau présente souvent une structure grainée pour homogénéiser son aspect de surface, ou pour masquer éventuellement les traces de la mise en forme de la pièce. Le grainage peut en outre contribuer à certain rendu esthétique de la pièce, ou codifier le type de propriétés tactiles de la pièce.

La peau et l'armature sont reliées par une couche 2 de mousse. La mousse présente un comportement compressible tel que, quand un occupant du véhicule touche la pièce, l'aptitude à la compression et au retour visco-élastique de l'ensemble peau + mousse donne une sensation tactile de moelleux. Un avantage de ce type de pièce et que l'épaisseur de mousse peut être différente selon les endroits, entre la peau et l'armature, ce qui permet de faire varier le comportement au toucher de différentes régions de la pièce, et permet d'adapter le contour de surface de la pièce pour une même forme d'armature 3 par exemple. L'épaisseur, désignée par "e", de la mousse, peut typiquement varier entre 5mm et 12mm pour une pièce à peau moussée, ou entre 0 et 5mm pour une pièce à peau thermogainée. Une telle variation n'est pas possible dans le cas de pièces revêtues par une peau pré-collée sur une couche de mousse d'épaisseur constante.

La figure 2b illustre plus en détails la structure d'une pièce 24 adaptée à l'intégration d'un système de rétroéclairage suivant un mode de réalisation de l'invention. On retrouve sur la figure 2b des éléments communs à la figure 2a, des éléments similaires étant désignés par les mêmes références.

Tel que visible sur la figure 2b, la peau 1 comprend au moins une couche opaque 7. Cette couche opaque étant prévue pour être entaillée ou amincie pour former un motif lumineux. Cette couche opaque 7 est avantageusement recouverte d'au moins une couche transparente 5 et/ou recouverte d'une couche translucide 6, permettant de laisser passer de la lumière tout en gardant à la peau des propriétés globalement imperméables (suffisamment imperméables pour rendre la pièce lessivable par exemple).

Il est envisageable de superposer par exemple trois couches aux propriétés optiques différentes, une première couche sensiblement opaque à l'éclairage prévue derrière la pièce, une couche translucide permettant, en fonction de la profondeur d'une entaille de cette couche translucide de faire varier le rendu lumineux du motif de l'entaille, et un couche transparente sur la face visible de la pièce.

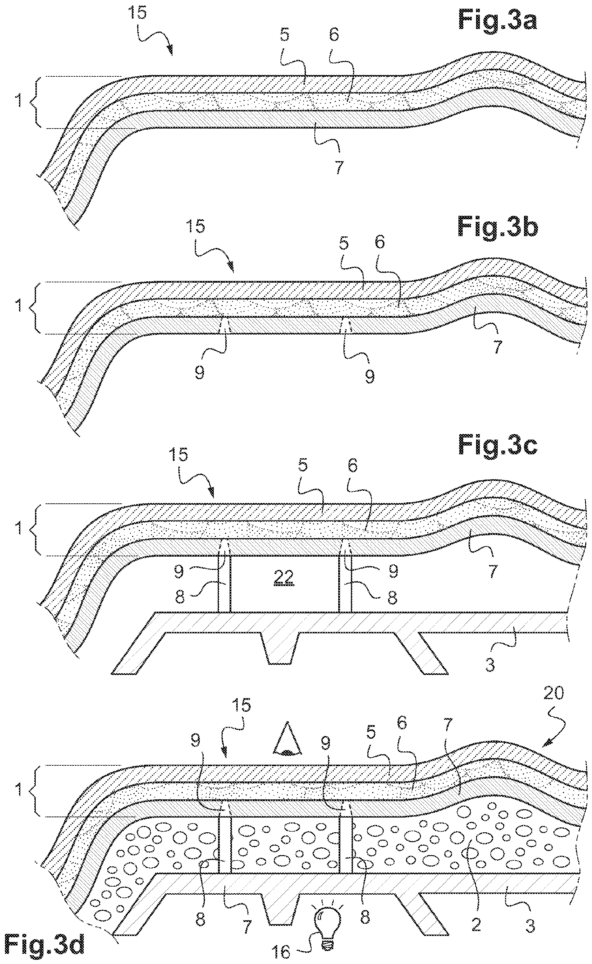

Les figures 3a à 3e, illustrent les différentes étapes d'un procédé de fabrication d'une pièce moussée avec rétro éclairage selon l'invention. On retrouve sur ces figures des éléments communs aux figures précédentes, des éléments similaires étant désignés par les mêmes références.

Comme visible en figure 3a, on fournit une peau de surface 1 souple, comportant au moins une couche opaque 7 d'épaisseur sensiblement constante, éventuellement protégée par une ou plusieurs couches transparentes 5 et/ou une ou plusieurs couches translucides 6. Une couche transparente 5 couvre de préférence la surface supérieure de la peau.

Une étape ultérieure illustrée en figure 3b consiste à découper au moins une partie de l'épaisseur de la couche opaque 7, afin de permettre à la lumière arrivant par-dessous la peau d'être visible à partir de la face supérieure 5 de la peau 1, destinée à devenir la surface supérieure d'une pièce moussée 20 selon l'invention. Une entaille 9 ainsi réalisée au travers de l'épaisseur de la couche opaque 7 peut éventuellement traverser au moins une partie de la couche translucide et/ou traverser une partie de la couche transparente 5. De manière préférentielle l'entaille 9 ne traverse pas l'intégralité de la couche 5. L'entaille peut ne jamais traverser intégralement la couche 5. L'entaille 9 peut traverser ponctuellement la couche transparente 5 en quelques points seulement du motif lumineux visible. Dans certaines variantes de réalisation, les couches 5, 6, 7 peuvent être formées par une même structure présentant un gradient d'opacité croissant en direction de la face qui est destinée à devenir la face cachée de la peau 1. On peut également envisager des variantes de réalisation dans lesquelles un seul matériau translucide forme la peau de surface 1, une entaille partielle dans cette peau de surface permettant de former des motifs lumineux 10 en réduisant l'épaisseur de matière translucide que doit la lumière émise par-dessous la pièce.

Les méthodes pour entailler la peau, ou la peau et la mousse, ou simultanément la peau, la mousse et l'insert sont connues, par exemple dans le domaine des planches de bord prédécoupées par laser, découpe lame chaude, découpe lame froide pour pouvoir libérer un airbag, et ne seront pas décrites ici.

Tel qu'illustré sur la figure 3c, la peau 1 ainsi entaillée par une ou plusieurs entailles 9 formant un motif 10, est placée dans un moule (non représenté) en vue d'une opération moussage. Une armature 3 est placée dans le moule, espacé de la peau 1, pour permettre à un espace 22 entre l'armature 3 et la peau 1, d'être rempli de mousse. Un ou plusieurs guides de lumière 8 sont également placés dans le moule, pour venir en appui sur les entailles 9 de la peau 1. Un mélange réactif apte à former la mousse par polymérisation est ensuite envoyé dans le moule pour former une couche de mousse 2 remplissant l'espace 22, et obtenir ainsi la pièce d'habillage 20 illustrée en figure 3e. L'appui du ou des guides de lumière peut être localisé au niveau des traits ou points du motif 10, ou peut être un appui plus large sur une portion de motif telles que les régions 14b ou 14c décrites précédemment.

Une source lumineuse 16 peut ensuite être placée en un ou plusieurs points d'entrée lumineux du ou des guides de lumière 8. La lumière peut ainsi transiter par le(s) guide(s) de lumière 8, et venir éclairer le motif 10 en surface de la peau 1au travers des entailles 9. Lorsque cette source lumineuse 16 est éteinte, l'observateur 17 placé du côté visible de la pièce 20, voit une surface grainée qui masque les autres éléments (mousse, insert...). Les entailles 9 n'étant pas rétro éclairées, restent peu ou pas visible à l'observation à l'œil nu.

Le ou les guides de lumière 8 peuvent être des pièces indépendantes de l'armature 3 assurant la tenue mécanique de la pièce. Selon un autre mode de réalisation, le ou les guides de lumière 8 peuvent être formés d'une seule pièce avec cette armature. On peut envisager des variantes de réalisation dans lesquels une seule pièce mono matière assure le rôle d'armature et de guide de lumière. On peut envisager d'autres variantes de réalisation avec une armature opaque sur laquelle serait surmoulée ou insérée une portion de guide de lumière destinée à venir en contact avec la peau. On peut également envisager des variantes de réalisation avec des guides de lumière en plusieurs parties, une ou plusieurs sources lumineuses étant placées à proximité d'un guide de lumière principal 4 sur lequel s'appuieraient des guides lumineux secondaires 8. La figure 3e peut ainsi illustrer un mode de réalisation dans lequel un guide de lumière principal 4 fait également office d'armature 3, et des guides de lumière secondaires 8 s'appuient sur le guide de lumière principal 4 ainsi que sur les entailles 9 de la peau 1. Cette même figure peut illustrer un mode de réalisation dans lequel l'armature 3 faisant office de guide de lumière 4 est monobloc avec des portions 8 de guide de lumière s'appuyant sur les entailles 9.

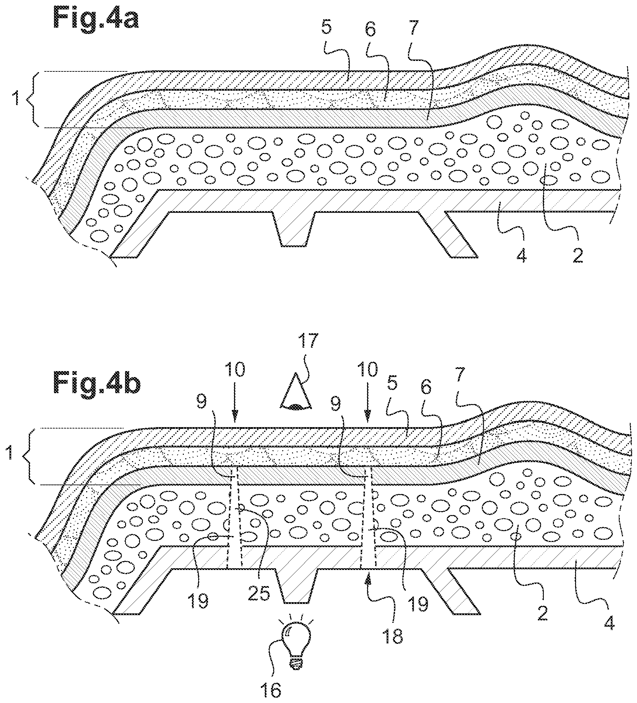

Les figures 4a et 4b illustrent des étapes de fabrication, d'une autre pièce d'habillage avec mousse rétroéclairée selon l'invention.

On retrouve sur les figures 4a et 4b des éléments communs aux figures précédentes, les mêmes éléments étant désignés par les mêmes références. Tel qu'illustré sur la figure 4a, on commence par placer dans un moule de moussage (non représenté) une peau 1 et un insert 4 (qui peut aussi servir de guide de lumière). On effectue ensuite une réaction de moussage pour remplir l'intervalle entre la peau et le guide de lumière 4 par une mousse compressible 2. Un autre procédé d'obtention de la pièce peut être de placer la peau associée à la mousse dans un cadre. Un insert 4 (qui peut aussi servir de guide de lumière) sera positionné sur une coquille pour réalisation de l'assemblage avec le complexe peau / mousse.

Une fois la pièce sortie du moule, on effectue, tel qu'indiqué sur la figure 4b, une découpe ouvrant un espace rectiligne entre une entaille 9 de la peau et une entaille 18 du guide de lumière 4, au travers d'une entaille 25 de la mousse 2 permettant à la lumière de diffuser par le chemin de conduction de lumière 19, ici défini par une succession d'entailles 18 et 25, du guide de lumière 4 vers l'entaille 9. Lorsqu'une source lumineuse 16 est placée à proximité d'une zone adéquate d'entrée de lumière du guide de lumière 4, la lumière peut circuler dans les guides de lumière4, s'échapper au niveau des entailles 18 ainsi ménagées dans le guide de lumière la lumière. La lumière s'échappant au niveau de ces entailles 18 peut se propager le long des chemins de conduction de lumière 19 formée par l'alignement des entailles du guide de lumière 4, de la mousse 2, et de la peau 1. Le motif lumineux 10 devient ainsi visible à un observateur 17 placé du côté de la face visible de la pièce 21. En complément, des guides de lumière additionnels peuvent être insérés dans les entailles 18 et 25.

L'invention ne se limite pas aux exemples de réalisation décrits et peut se décliner en de nombreuses variantes. La peau peut ne comporter qu'une seule couche aux propriétés sensiblement opaques par rapport à la lumière de la source lumineuse, ou peut ne comporter qu'une seule couche translucide.

La peau peut comporter une succession de couche opaque et de couche translucide sans couche clairement transparente. La peau peut comporter une couche opaque et une couche transparente sans comporter de couche translucide. La peau peut comporter une couche translucide et une couche transparente, sans couche fortement opaque.

Le guide de lumière peut être une structure sensiblement rigide et contribuer avec l'armature à la tenue de la pièce, voire être monobloc avec l'armature. Un élément faisant ainsi à la fois office d'armature et de guide de lumière peut comprendre un seul matériau transparent, ou comprendre au moins une portion en matériau opaque et au moins une portion en matériau transparent. Le matériau opaque et le matériau transparent peuvent être assemblés, par exemple par clipsage, ou être surmoulés l'un sur l'autre.

Le guide de lumière peut être une structure souple, ou comporter des portions de structures souples. Le guide de lumière peut être moulé en matériau polymère transparent de rigidité comparable à celle de l'armature, ou être moulé en matériau polymère transparent dont la souplesse ou l'épaisseur rend le guide de lumière plus déformable que l'armature.

Le guide de lumière peut comporter un enchevêtrement compressible de fibres conductrices de lumière, placées en appui contre la peau au niveau des entailles 9 et s'appuyant par ailleurs sur un guide de lumière moulé situé à distance de la peau. Un réseau de fibres souples conductrices de lumière à orientation aléatoire peut être noyé dans une mousse opaque au contact du guide de lumière, pour amener la lumière sous la peau au voisinage des zones formant motif.

La mousse peut elle-même être choisie pour être suffisamment translucide dans la longueur d'onde de l'éclairage alimentant le guide de lumière. On peut envisager de n'entailler que la peau si on utilise une mousse seule dont l'opacité est réduite par rapport à l'épaisseur de mousse utilisée au niveau de la zone d'affichage.

Le guide de lumière peut comporter une lame ressort transparente disposée s'appuyant de manière tangente à la zone formant motif de la peau, découpée par les entailles 9. La lame conductrice de lumière peut être ainsi fléchie et limiter la rigidité de la pièce au niveau de la zone d'affichage, par rapport aux modes de réalisation avec guide de lumière formant des appuis perpendiculaires à la surface.

Une pièce d'habillage moussée selon l'invention permet d'assurer à la fois confort tactile et interactivité de l'environnement de l'habitacle du véhicule.

## Revendications

1. Pièce d'habillage (24) pour véhicule automobile, comprenant :
- une armature (3),
- une peau (1) de surface souple recouvrant l'armature (3)
- une couche (2) de mousse compressible reliant la peau (1) et l'armature (3), remplissant une épaisseur variable (22) séparant la peau (1) de l'armature (3),
la pièce d'habillage (24) comprenant au moins un guide de lumière (4) alimenté par une source lumineuse (16), le guide de lumière formant sous la mousse (2) ou dans la mousse (2), au moins une zone longiligne ou surfacique de diffusion, configurée pour diffuser de la lumière en direction d'une ou plusieurs portions (14b, 14c), de la peau (1), la peau (1) comprenant au moins une couche (7) opaque à la lumière émanant du guide de lumière(4), la couche opaque (7) présentant en regard d'au moins une zone de diffusion (14b, 14c) du guide de lumière (4), des portions formant motif (10, 10b, 10c) d'affichage au niveau de réduction locales d'épaisseur et/ou des découpes locales (9) de la couche opaque (7), ménagées pour laisser passer localement au travers de la peau, de la lumière émise par le guide de lumière (4), **caractérisé en ce que** la mousse est entaillée d'au moins une ligne de découpe traversant la mousse (2) entre le guide (4) de lumière et la peau (1), la même ligne traversant au moins une partie de l'épaisseur de la couche opaque (7).

2. Pièce d'habillage selon la revendication 1, dans laquelle la peau (1) comprend au moins une couche (6) de matière translucide et/ou une couche (5) de matière transparente à l'éclairage émanant du guide de lumière (4), la couche translucide et/ou la couche transparente recouvrant la couche (7) de matière opaque.

3. Pièce d'habillage selon l'une des revendications 1 ou 2, dans laquelle un guide de lumière (4) vient au contact de la peau (1) au niveau d'au moins une partie des portions (14b, 14c) formant motif d'affichage.

4. Pièce d'habillage selon l'une des revendications 1 à 3, dans laquelle au moins une portion d'un guide de lumière (4) est séparés de la peau (1) par une épaisseur (2) de mousse, la mousse étant traversée par des entailles (25) ouvertes entre le ou les guides de lumière (4) et la ou les zones (14b, 14c) formant motif de la peau.

5. Pièce d'habillage selon l'une quelconque des revendications 2 à 4, dans laquelle la couche (6) de matière translucide et/ou la couche (5) de matière transparente présente au niveau des zones (14b, 14c) formant motif, des restrictions d'épaisseurs ne traversant qu'une partie de l'épaisseur de ladite couche.

6. Véhicule équipé d'une pièce d'habillage selon l'une quelconque des revendications précédentes, la pièce d'habillage (24) étant disposée autour, ou le long, d'une ouverture permettant à accéder à un volume de rangement.

7. Véhicule équipé d'une pièce d'habillage (24) selon l'une quelconque des revendications 1 à 5, la pièce d'habillage étant disposée autour de, ou jouxtant, une poignée ou un organe d'actionnement manuel.

8. Véhicule équipé d'une pièce d'habillage (24) selon l'une quelconque des revendications 1 à 5, la pièce d'habillage comprenant une surface capacitive disposée sensiblement sous une zone (14b, 14c) formant motif, la surface capacitive étant configurée pour détecter le contact d'une main sur la zone formant motif.

9. Procédé de fabrication d'une pièce (24) rétroéclairée d'habillage de véhicule automobile, comprenant les étapes :
- placer dans un moule de moussage une peau (1) souple comprenant au moins une couche (7) opaque au rétroéclairage,
- placer dans le moule une armature (3) rigide espacée de la peau (1),
- former une couche (2) de mousse entre la peau (1) et l'armature (3), de manière à rendre la mousse adhérente à la peau et à l'armature,
- entailler la couche opaque (7) sur au moins une portion de son épaisseur pour permettre à un rétroéclairage de traverser un motif (10, 10b, 10c) formé par les zones entaillées (14b, 14c),
en entaillant également la mousse par au moins une ligne de découpe traversant à la fois la mousse (2) et la couche opaque (7),
- placer un guide de lumière (8, 4) au droit des zones comportant le motif entaillé.

10. Procédé de fabrication d'une pièce rétroéclairée d'habillage de véhicule automobile, comprenant les étapes :
- placer dans un cadre une peau souple associée à une mousse comprenant au moins une couche opaque au rétroéclairage,
- placer dans une coquille une armature rigide espacée de la peau,
- chauffer la peau, la buller, et la plaquer contre l'armature,
- plaquer la peau sur une coquille grainée pour réaliser des motifs sur la peau,
- entailler sélectivement la couche opaque sur au moins une portion de son épaisseur, en entaillant également la mousse par au moins une ligne de découpe traversant à la fois la mousse et la couche opaque, pour permettre à un rétroéclairage de traverser un motif formé par les zones entaillées,
- placer un guide de lumière au droit des zones comportant le motif entaillé.

## Patentansprüche

1. Verkleidungsteil (24) für ein Kraftfahrzeug, umfassend:
- eine Bewehrung (3),
- eine weiche Oberflächenhaut (1), die die Bewehrung (3) bedeckt
- eine Schicht (2) aus zusammendrückbarem Schaumstoff, die die Haut (1) und die Bewehrung (3) verbindet, die eine variable Dicke (22) ausfüllt, die die Haut (1) von der Bewehrung (3) trennt,
wobei das Verkleidungsteil (24) wenigstens einen Lichtleiter (4) umfasst, der von einer Lichtquelle (16) gespeist wird, wobei der Lichtleiter unter dem Schaumstoff (2) oder in dem Schaumstoff (2) wenigstens eine langgestreckte oder flächige Streuzone bildet, die dazu ausgebildet ist, Licht in Richtung eines oder mehrerer Teilbereiche (14b, 14c) der Haut (1) zu streuen, wobei die Haut (1) wenigstens eine Schicht (7) umfasst, die für das Licht aus dem Lichtleiter (4) undurchlässig ist, wobei die undurchlässige Schicht (7) gegenüber wenigstens einer Streuzone (14b, 14c) des Lichtleiters (4) Teilbereiche aufweist, die ein Anzeigemuster (10, 10b, 10c) an lokalen Dickenverringerungen und/oder lokalen Ausschnitten (9) der undurchlässigen Schicht (7) bilden, die dafür vorgesehen sind, lokal durch die Haut Licht hindurchzulassen, das vom Lichtleiter (4) abgegeben wird, **dadurch gekennzeichnet, dass** der Schaumstoff von wenigstens einer Schnittlinie eingeschnitten ist, die zwischen dem Lichtleiter (4) und der Haut (1) durch den Schaumstoff (2) hindurchgeht, wobei dieselbe Linie durch wenigstens einen Abschnitt der Dicke der undurchlässigen Schicht (7) hindurchgeht.

2. Verkleidungsteil nach Anspruch 1, wobei die Haut (1) wenigstens eine Schicht (6) aus durchscheinendem Material und/oder eine Schicht (5) aus Material, das für die Beleuchtung aus dem Lichtleiter (4) transparent ist, umfasst, wobei die durchscheinende Schicht und/oder die transparente Schicht die Schicht (7) aus undurchlässigem Material bedeckt.

3. Verkleidungsteil nach einem der Ansprüche 1 oder 2, wobei ein Lichtleiter (4) an wenigstens einem Abschnitt der Anzeigemuster bildenden Teilbereiche (14b, 14c) mit der Haut (1) in Kontakt kommt.

4. Verkleidungsteil nach einem der Ansprüche 1 bis 3, wobei wenigstens ein Teilbereich eines Lichtleiters (4) von der Haut (1) durch eine Schaumstoffdicke (2) getrennt ist, wobei der Schaumstoff von offenen Einschnitten (25) zwischen dem oder den Lichtleitern (4) und der oder den Muster bildenden Zonen (14b, 14c) der Haut durchzogen ist.

5. Verkleidungsteil nach einem der Ansprüche 2 bis 4, wobei die Schicht (6) aus durchscheinendem Material und/oder die Schicht (5) aus transparentem Material an den Muster bildenden Zonen (14b, 14c) Dickenbeschränkungen aufweist, die nur durch einen Abschnitt der Dicke der Schicht hindurchgehen.

6. Fahrzeug, das mit einem Verkleidungsteil nach einem der vorhergehenden Ansprüche ausgerüstet ist, wobei das Verkleidungsteil (24) um eine oder entlang einer Öffnung angeordnet ist, die Zugang zu einem Stauvolumen gestatten.

7. Fahrzeug, das mit einem Verkleidungsteil (24) nach einem der Ansprüche 1 bis 5 ausgerüstet ist, wobei das Verkleidungsteil um oder angrenzend an einen Griff oder ein Handbetätigungselement angeordnet ist.

8. Fahrzeug, das mit einem Verkleidungsteil (24) nach einem der Ansprüche 1 bis 5 ausgerüstet ist, wobei das Verkleidungsteil eine kapazitive Oberfläche umfasst, die im Wesentlichen unter einer Muster bildenden Zone (14b, 14c) angeordnet ist, wobei die kapazitive Oberfläche dazu ausgebildet ist, den Kontakt einer Hand auf der Muster bildenden Zone zu detektieren.

9. Verfahren zur Herstellung eines hinterleuchteten Kraftfahrzeug-Verkleidungsteils (24), umfassend die Schritte:
- Platzieren einer weichen Haut (1), die wenigstens eine Schicht (7) umfasst, die für Hinterleuchtung undurchlässig ist, in einer Schäumform,
- Platzieren einer starren Bewehrung (3), die von der Haut (1) beabstandet ist, in der Form,
- Bilden einer Schaumschicht (2) zwischen der Haut (1) und der Bewehrung (3), um den Schaumstoff an der Haut und an der Bewehrung haften zu lassen,
- Einschneiden der undurchlässigen Schicht (7) auf wenigstens einem Teilbereich ihrer Dicke, um es einer Hinterleuchtung zu gestatten, durch ein Muster (10, 10b, 10c) hindurchzugehen, das von den eingeschnittenen Zonen (14b, 14c) gebildet ist,
wobei ebenfalls der Schaumstoff durch wenigstens eine Schnittlinie eingeschnitten wird, die sowohl durch den Schaumstoff (2) als auch die undurchlässige Schicht (7) hindurchgeht,
- Platzieren eines Lichtleiters (8, 4) gegenüber den Zonen mit dem eingeschnittenen Muster.

10. Verfahren zur Herstellung eines hinterleuchteten Kraftfahrzeug-Verkleidungsteils, umfassend die Schritte:
- Platzieren einer weichen Haut, die einem Schaumstoff zugeordnet ist, umfassend wenigstens eine für Hinterleuchtung undurchlässige Schicht, in einem Rahmen,
- Platzieren einer starren Bewehrung, die von der Haut beabstandet ist, in einer Schale,
- Erhitzen, Ölen der Haut und Pressen derselben gegen die Bewehrung,
- Pressen der Haut auf eine genarbte Schale, um Muster auf der Haut auszubilden,
- selektives Einschneiden der undurchlässigen Schicht auf wenigstens einem Teilbereich ihrer Dicke, wobei ebenfalls der Schaumstoff durch wenigstens eine Schnittlinie eingeschnitten wird, die sowohl durch den Schaumstoff als auch die undurchlässige Schicht hindurchgeht, um es einer Hinterleuchtung zu gestatten, durch ein Muster hindurchzugehen, das von den eingeschnittenen Zonen gebildet ist,
- Platzieren eines Lichtleiters gegenüber den Zonen mit dem eingeschnittenen Muster.

## Claims

1. Motor vehicle trim piece (24), comprising:
- a frame (3),
- a flexible surface skin (1) covering the frame (3),
- a compressible foam layer (2) connecting the skin (1) and the frame (3), filling a variable thickness (22) separating the skin (1) from the frame (3),
the trim piece (24) comprising at least one light guide (4) fed by a light source (16), the light guide forming, under the foam (2) or in the foam (2), at least one slender or surface diffusion area, configured to diffuse light in the direction of one or more portions (14b, 14c) of the skin (1),
the skin (1) comprising at least one layer (7) opaque to the light coming from the light guide (4), the opaque layer (7) having, opposite at least one diffusion area (14b, 14c) of the light guide (4), display pattern-forming portions (10, 10b, 10c) at local thickness reductions and/or local cutouts (9) of the opaque layer (7), which are provided to locally transmit, through the skin, light emitted by the light guide (4), **characterized in that** at least one cutout line passes through the foam (2) between the light guide (4) and the skin (1), the same line passing through at least some of the thickness of the opaque layer (7).

2. Trim piece according to Claim 1, wherein the skin (1) comprises at least a layer (6) of matter that is translucent and/or a layer (5) of matter that is transparent to the lighting coming from the light guide (4), the translucent layer and/or the transparent layer covering the layer (7) of opaque matter.

3. Trim piece according to either one of Claims 1 and 2, wherein a light guide (4) comes into contact with the skin (1) at at least some of the display pattern-forming portions (14b, 14c).

4. Trim piece according to one of Claims 1 to 3, wherein at least one portion of a light guide (4) is separated from the skin (1) by a foam thickness (2), the foam being crossed by notches (25) open between the light guide or guides (4) and the pattern-forming area or areas (14b, 14c) of the skin.

5. Trim piece according to any one of Claims 2 to 4, wherein the layer (6) of translucent matter and/or the layer (5) of transparent matter has, at the pattern-forming areas (14b, 14c), thickness restrictions which only pass through some of the thickness of said layer.

6. Vehicle provided with a trim piece according to any one of the preceding claims, the trim piece (24) being arranged around, or along, an opening making it possible to access a storage volume.

7. Vehicle provided with a trim piece (24) according to any one of Claims 1 to 5, the trim piece being arranged around, or adjacent to, a handle or a manual actuation member.

8. Vehicle provided with a trim piece (24) according to any one of Claims 1 to 5, the trim piece comprising a capacitive surface arranged substantially under a pattern-forming area (14b, 14c), the capacitive surface being configured to detect the contact of a hand on the pattern-forming area.

9. Method of manufacturing a motor vehicle trim backlit piece (24), comprising the steps of:
- placing, in a foaming mould, a flexible skin (1) comprising at least one layer (7) opaque to the backlighting,
- placing, in the mould, a rigid frame (3) spaced apart from the skin (1),
- forming a layer (2) of foam between the skin (1) and the frame (3), so as to make the foam adhere to the skin and to the frame,
- notching the opaque layer (7) on at least one portion of the thickness thereof in order to allow backlighting to pass through a pattern (10, 10b, 10c) formed by the notched areas (14b, 14c),
by also notching the foam with at least one cutout line passing through both the foam (2) and the opaque layer (7),
- placing a light guide (8, 4) in line with the areas including the notched pattern.

10. Method of manufacturing a motor vehicle trim backlit piece, comprising the steps of:
- placing, in a mounting, a flexible skin associated with a foam comprising at least one layer opaque to the backlighting,
- placing, in a shell, a rigid frame spaced apart from the skin,
- heating the skin, bubbling it, and pressing it against the frame,
- pressing the skin onto a grained shell in order to produce patterns on the skin,
- selectively notching the opaque layer on at least one portion of the thickness thereof in order to allow backlighting to pass through a pattern formed by the notched areas,
- placing a light guide in line with the areas including the notched pattern.
